# EUROPÄISCHE PATENTSCHRIFT

(11) **EP 4 334 167 B1**
(45) Veröffentlichungstag und Bekanntmachung des Hinweises auf die Patenterteilung: **04.06.2025**
(21) Anmeldenummer: 22719922.1
(22) Anmeldetag: 31.03.2022
(51) Int. Cl.: B60M 1/12, B60M 1/22

(54) **OBERLEITUNGSSYSTEM MIT WINDSCHIEFEM PARALLELFELD**
OVERHEAD LINE SYSTEM WITH A SKEWED PARALLEL ZONE
SYSTÈME CATÉNAIRE À CHAMP PARALLÈLE INCLINÉ

(30) Priorität: 22.06.2021 DE 102021206407
(43) Veröffentlichungstag der Anmeldung: 13.03.2024
(73) Patentinhaber: Siemens Mobility GmbH, 81739 München (DE)
(72) Erfinder: HAHN, Gunter, 91353 Hausen (DE)
(74) Vertreter: Siemens Patent Attorneys
(86) Internationale Anmeldenummer: PCT/EP2022/058657
(87) Internationale Veröffentlichungsnummer: WO 2022/268374

(56) Entgegenhaltungen:
- EP-B1- 2 631 107
- DE-C- 724 215

## Beschreibung

Die Erfindung betrifft ein Oberleitungssystem und ein Verfahren zur Errichtung des Oberleitungssystems.

Oberleitungssysteme dienen zu Bereitstellung einer elektrischen Energie für ein elektrisch angetriebenes Fahrzeug. Üblicherweise wird diese elektrische Energie mittels Fahrdrähten an einen Stromabnehmer, insbesondere einen Pantographen, des Fahrzeugs übertragen. Für den Betrieb müssen die Fahrdrähte eine gewisse mechanische Zugspannung aufweisen. Aus diesem Grund werden die Fahrdrähte nach einer Länge von etwa 1,5 km einem Abspannmasten zugeführt. Zur Bereitstellung einer durchgehend befahrbaren Oberleitung werden die einzelnen Fahrdrähte anhand von Parallelfeldern zu einer durchgehend befahrbaren Oberleitung angeordnet. Entlang dieser Parallelfelder müssen die Fahrdrähte in vorbestimmten Abständen gemäß strenger Lagevorgaben zueinander verlaufen, um einen betriebssicheren Wechsel der Fahrdrähte zu realisieren. Neben der Elektrifizierung von schienengebundenen Fahrzeugen werden vermehrt Straßenfahrzeuge elektrifiziert, was eine Anpassung von Oberleitungssystemen an nicht spurgebundene Fahrzeuge erfordert. Im Vergleich zu Oberleitungssystemen für spurgebundene Fahrzeuge gelten für solche Oberleitungssysteme für nicht spurgebundene Fahrzeuge strengere Lagevorgaben. Dies stellt eine besondere Schwierigkeit dar, ein Oberleitungssystem an einen bereits bestehenden Straßenverlauf anzupassen.

Aus der DE 724 215 C ist eine elastische Kettenfahrleitung ohne Stützstreben für elekrische Bahnen mit hohen Geschwindigkeiten insbesondere für bzw. in Kurven bekannt.

Aus der EP 2 631 107 B1 sind Kettenfahrleitungen elektrischer Bahnen mit einer Nachspanneinrichtung sowie mit mindestens zwei Fahrleitungen, die jeweils ein Tragseil und einen Fahrdraht aufweisen, bekannt, wobei die Nachspanneinreichung ein einfaches und schnelles Verlegen von Fahrleitungen ermöglicht.

Die Aufgabe der Erfindung besteht darin, eine an einen vorgegebenen Straßenverlauf anpassbare durchgängig befahrbare Oberleitung bereitzustellen.

Diese Aufgabe wird gelöst durch ein Oberleitungssystem mit den Merkmalen des Anspruchs 1.

Des Weiteren liegt der Erfindung die Aufgabe zugrunde, ein Verfahren zur Erstellung des erfindungsgemäßen Oberleitungssystems anzugeben.

Diese Aufgabe wird gelöst durch das Verfahren mit den Merkmalen des nebengeordneten Verfahrensanspruchs.

Vorteilhafte Weiterbildungen der vorliegenden Erfindung können jeweils den abhängigen Unteransprüchen entnommen werden.

Das erfindungsgemäße Oberleitungssystem weist mehrere Kettenwerke auf, welche jeweils einen mittels mehreren Verbindungsvorrichtungen mit einem Tragseil verbundenen Fahrdraht aufweisen und welche anhand von Parallelfeldern zu einer durchgehend befahrbaren Oberleitung angeordnet sind. Des Weiteren weist das erfindungsgemäße Oberleitungssystem wenigstens eine Oberleitung auf, welche in einem Krümmungsabschnitt derart angeordnet ist, dass deren vertikale Projektion in eine horizontale Ebene einen gekrümmten Verlauf aufweist. Zudem ist ein gekrümmtes Parallelfeld vorgesehen, welches in dem Krümmungsabschnitt derart angeordnet ist, dass dessen vertikale Projektion in die horizontale Ebene in dem Krümmungsabschnitt dem genannten gekrümmten Verlauf der Projektion, der wenigstens einen Oberleitung folgt. Beispielhaft veranschaulicht kann das genannte Oberleitungssystem entlang eines Kurvenabschnitts eines Straßenverlaufs angeordnet sein. Hierbei kann in diesem Kurvenabschnitt der genannte Krümmungsabschnitt derart angeordnet sein, dass die wenigstens eine Oberleitung im Wesentlichen parallel zu einer Fahrbahnebene des Straßenverlaufs als auch im Wesentlichen parallel zu dem Straßenverlauf angeordnet ist. Auf diese Weise ist eine Elektrifizierung eines beliebig gekrümmten Straßenverlaufs realisierbar.

Grundsätzlich erfolgt in einem Parallelfeld ein Wechsel von Fahrdrähten paarweise angeordneter Kettenwerke der mehreren Kettenwerke. Paarweise anhand von Parallelfeldern zu einer durchgehend befahrbaren Oberleitung angeordnete Kettenwerke werden im Folgenden als Kettenwerkspaar bezeichnet. Der Wechsel von Fahrdrähten eines Kettenwerkspaars erfolgt üblicherweise, indem ein Fahrdraht eines ersten Kettenwerks des Kettenwerkspaars ausgehend von einem Niveau eines Verlaufs der Oberleitung angehoben und ein Fahrdraht eines zweiten Kettenwerks des Kettenwerkspaars auf ein Niveau eines Verlaufs der Oberleitung abgesenkt wird. Die Fahrdrähte eines Kettenwerkspaars weisen im Normalbetrieb dieselbe Polung auf. In einer vorteilhaften Ausführungsvariante ist das Oberleitungssystem zweipolig ausgebildet, indem dieses zwei Oberleitungen unterschiedlicher Polarität aufweist. Auf diese Weise wird eine Elektrifizierung von Straßenfahrzeugen ohne Rückstromführung über eine Fahrspur ermöglicht.

Eine vorteilhafte Weiterbildung sieht vor, dass in dem Krümmungsabschnitt angeordnete Kettenwerke der mehreren Kettenwerke derart ausgebildet sind, dass eine in einer Ebene verlaufende, lotrechte Achse und eine in derselben Ebene verlaufende, gerade Verbindungslinie zwischen dem Fahrdraht und dem Tragseil eines jeweiligen Kettenwerks einen Winkel einschließen, welcher ≥ 9° und ≤ 70° ist. Bei der genannten Ebene handelt es sich hierbei um eine im Wesentlichen senkrecht zu einer Längserstreckungsrichtung der wenigstens einen Oberleitung erstreckenden Ebene. Auf diese Weise kann ein Verlauf eines Fahrdrahts zuverlässig einem Verlauf einer Fahrspur folgen. Vorzugsweise sind der Fahrdraht und das Tragseil jedes in dem gekrümmten Parallelfeld angeordneten Kettenwerks derart windschief zueinander beabstandet, dass diese mit einer horizontalen Abstandskomponente zueinander beabstandet sind.

Eine weitere vorteilhafte Weiterbildung sieht vor, dass die Fahrdrähte und Tragseile eines ersten und eines zweiten Kettenwerks der mehreren Kettenwerke in einem Kreuzungsbereich derart angeordnet sind, dass Projektionen des Fahrdrahts und des Tragseils des ersten Kettenwerks in einer Horizontalebene Projektionen des Fahrdrahts und des Tragseils in diese Horizontalebene kreuzen. Hierbei sind der Fahrdraht und das Tragseil des ersten Kettenwerks in dem Kreuzungsbereich jeweils oberhalb des Fahrdrahts und des Tragseils des zweiten Kettenwerks angeordnet. Dies ermöglicht es, eine Kollision zwischen sich kreuzenden Fahrdrähten und Tragseilen weitestgehend zu verhindern.

Ferner sieht eine vorteilhafte Weiterbildung vor, dass jedes Kettenwerk der mehreren Kettenwerke einen Abschnitt aufweist, entlang dessen mehrere, unmittelbar zueinander benachbarte Verbindungsvorrichtungen des jeweiligen Kettenwerks derart voneinander beabstandet sind, dass deren Verbindungsstellen mit dem Fahrdraht entlang des Verlaufs des Fahrdrahts denselben Regelabstand zueinander aufweisen. Des Weiteren sind die genannten Abschnitte der Kettenwerke derart in dem Krümmungsabschnitt angeordnet, dass Verbindungsvorrichtungen unterschiedlicher Kettenwerke eines Kettenwerkspaars einen Mindestabstand aus einem Wertebereich von einem halben Wert des Regelabstands abzüglich 100 cm bis zu dem halben Wert des Regelabstands zuzüglich 100 cm zueinander aufweisen. Der Mindestabstand zwischen zwei Verbindungsvorrichtungen entspricht dem Abstand zwischen einem Schnittpunkt einer Achse mit dem Tragseil eines ersten Kettenwerks, wobei diese Achse ausgehend von einer Verbindungsstelle einer Verbindungsvorrichtung eines zweiten Kettenwerks mit einem zugehörigen Tragseil des zweiten Kettenwerks im Wesentlichen senkrecht zum Verlauf des Tragseils des zweiten Kettenwerks an dieser Verbindungsstelle der Verbindungsvorrichtung des zweiten Kettenwerks ist, und einer zu diesem Schnittpunkt nächstliegenden Verbindungstelle einer Verbindungsvorrichtung des ersten Kettenwerks mit dem zugehörigen Tragseil des ersten Kettenwerks. Dies ermöglicht es trotz geringer Abstände zwischen den Kettenwerken eines Kettenwerkspaars zuverlässig Kollisionen der Verbindungsvorrichtungen untereinander zu verhindern.

In einer weiteren vorteilhaften Ausführungsvariante wird vorgesehen, dass der Regelabstand einen Wert aus einem Wertebereich von 270 cm bis 420 cm, vorzugsweise aus einem Wertebereich von 270 cm bis 330 cm, aufweist. Auf diese Weise wird es ermöglicht, strenge Lagevorgaben zu einer Lage und Abständen der Fahrdrähte und Tragseile zueinander im gekrümmten Parallelfeld zuverlässig umzusetzen. Ferner kann verhindert werden, dass im Falle eines Risses eines Fahrdrahts ein Abschnitt desselben mit einem Fahrzeug kollidiert, welches diesen Fahrdraht unterfährt.

Des Weiteren sieht eine vorteilhafte Weiterbildung vor, dass Verbindungsvorrichtungen der Kettenwerke unterschiedlicher Kettenwerkspaare, welche jeweils anhand des gekrümmten Parallelfelds zu einer durchgehend befahrbaren Oberleitung angeordnet sind, einen Mindestabstand von 20 cm, vorzugsweise von 30 cm zueinander aufweisen. Der genannte Mindestabstand zwischen Verbindungsvorrichtungen von Kettenwerken unterschiedlicher Kettenwerkspaare bemisst sich wie im Zusammenhang mit dem Mindestabstand zwischen Verbindungsvorrichtungen unterschiedlicher Kettenwerke eines Kettenwerkspaars beschrieben. Insbesondere ist der Mindestabstand von Verbindungsvorrichtungen der Kettenwerke unterschiedlicher Kettenwerkspaare unabhängig von dem zuvor genannten Regelabstand. Dies ermöglicht es, eine hohe Betriebssicherheit zu realisieren. Im Falle eines Risses eines Fahrdrahts kann so beispielsweise ein Kurzschluss mit Fahrdrähten anderer Polung weitestgehend verhindert werden.

Weiter sieht eine vorteilhafte Weiterbildung vor, dass eine Verbindungsvorrichtung zwischen einem befahrbaren Fahrdraht und einem Tragseil eines ersten Kettenwerks eines Kettenwerkspaars einen gekröpften Abschnitt aufweist. Dieser gekröpfte Abschnitt ist hierbei derart angeordnet, dass dieser in jedem seiner Punkte mindestens einen lichten Abstand von 5 cm zu einem befahrbaren Fahrdraht eines zweiten Kettenwerks des genannten Kettenwerkspaars aufweist. Unter einem befahrbaren Fahrdraht ist hierbei ein Fahrdraht zu verstehen, welcher auf einem Niveau der Oberleitung angeordnet ist, sodass zwischen diesem Fahrdraht und einem Stromabnehmer, insbesondere einem Pantographen, eines Fahrzeugs, eine elektrische Energie übertragbar ist. Ein unbefahrbarer Fahrdraht ist hingegen oberhalb eines Niveaus der durchgehend befahrbaren Oberleitung angeordnet. In dem letztgenannten Fall ist eine Übertragung einer elektrischen Energie zu einem Stromabnehmer aufgrund der höheren Lage des Fahrdrahts verhindert. Anhand dieser Weiterbildung wird eine betriebsbedingte Kollision zwischen einer Verbindungsvorrichtung und einem unbefahrbaren Fahrdraht weitestgehend verhindert. Des Weiteren wird hierdurch eine kompaktbauende und betriebssichere Anordnung des Oberleitungssystems ermöglicht. Alternativ oder zusätzlich ist denkbar, dass der genannte gekröpfte Abschnitt in jedem seiner Punkte mindestens einen lichten Abstand von 5 cm zu einem unbefahrbaren Fahrdraht oder einem Tragseil eines der mehreren Kettenwerke aufweist. Ferner wird die gekröpfte Verbindungsvorrichtung bevorzugt mit einem Fahrdraht verbunden, welcher im Vergleich zu einem weiteren Fahrdraht desselben Kettenwerks innenliegend, also entlang eines Abschnitts mit stärkerer Krümmung, angeordnet ist.

Ferner sieht eine vorteilhafte Weiterbildung vor, dass eine Verbindungsvorrichtung zwischen einem Fahrdraht und einem Tragseil eines ersten Kettenwerks eines Kettenwerkspaars einen gekrümmten Abschnitt aufweist. Dieser gekrümmte Abschnitt ist derart angeordnet, dass jeder seiner Punkte mindestens einen lichten Abstand von 5 cm zu einem Tragseil eines zweiten Kettenwerks des genannten Kettenwerkspaars aufweist. Dies ermöglicht es, eine aufwandsgünstige Anpassung des Oberleitungssystems an bereits bestehende Fahrbahnverläufe zu realisieren. Anhand dieser Weiterbildung wird eine betriebsbedingte Kollision zwischen einer Verbindungsvorrichtung und einem Tragseil weitestgehend verhindert. Alternativ oder zusätzlich ist denkbar, dass der genannte gekrümmte Abschnitt in jedem seiner Punkte mindestens einen lichten Abstand von 5 cm zu einem Fahrdraht oder einem Tragseil eines der mehreren Kettenwerke aufweist.

Eine weitere vorteilhafte Weiterbildung sieht vor, dass eine Verbindungsvorrichtung der mehreren Verbindungsvorrichtungen einen Fahrdraht und ein Tragseil eines Kettenwerks der mehreren Kettenwerke derart miteinander verbindet, dass der Verlauf der Verbindungsvorrichtung ausgehend von dem Fahrdraht hin zu dem Tragseil einer geraden Verbindungslinie zwischen dem Fahrdraht und dem Tragseil folgt. Darunter, dass der Verlauf der Verbindungsvorrichtung einer geraden Verbindungslinie folgt, soll im vorliegenden Zusammenhang verstanden werden, dass ein Verlauf der Verbindungsvorrichtung frei ist von Versprüngen, Kröpfungen oder Krümmungen, welche wesentlich von der geraden Verbindungslinie abweichen. Geringfügige Krümmungen, welche beispielsweise durch ein Material der Verbindungsvorrichtung oder eine Art und Weise der Verbindung der Verbindungsvorrichtung mit dem Fahrdraht oder dem Tragseil verursacht werden, sollen dennoch als ein Verlauf angesehen werden, welcher der geraden Verbindungslinie folgt.

Ferner weist das Oberleitungssystem in einer vorteilhaften Weiterbildung ein Mastsystem mit mehreren Haltevorrichtungen und mehreren Masten auf. Hierbei sind die Fahrdrähte sowie die Tragseile der mehreren Kettenwerke mit wenigstens einer der mehreren Haltevorrichtungen unmittelbar verbunden. Des Weiteren sind in dem Krümmungsabschnitt ein Fahrdraht und ein Tragseil eines der mehreren Kettenwerke derart mit einer der mehreren Haltevorrichtungen und einem Mast des Mastsystems verbunden, dass ein vertikaler Stützpunktabstand zwischen diesem Fahrdraht und diesem Tragseil an diesem Mast in Abhängigkeit einer Krümmung des Krümmungsabschnitts umso kleiner ist, je größer die Krümmung des Krümmungsabschnitts ist.

In einer vorteilhaften Ausführungsvariante beträgt der Stützpunktabstand entlang eines geraden Abschnitts des Oberleitungssystems etwa 170 cm. Betrachtet man den Krümmungsabschnitt als Kreisbogen, so reduziert sich dessen Krümmung mit einer Reduzierung des zugehörigen Kreisradius. Ausgehend von dem genannten Stützpunktabstand entlang des geraden Abschnitts, weist der Stützpunktabstand in dem Krümmungsabschnitt bei einem Kreisradius von etwa 800 m einen Wert aus einem Wertebereich von einschließlich 60 cm bis höchstens 100 cm auf. In Abhängigkeit einer Krümmung des Krümmungsabschnitts sowie einem Winkel zwischen dem jeweiligen Fahrdraht und dem jeweiligen Tragseil eines Kettenwerks der mehreren Kettenwerke kann der vertikale Stützpunktabstand derart variiert werden, dass dieser ausgehend von einem kleinsten Wert von etwa 60 cm für einen Krümmungsradius von 800 m bis hin zu einem Wert von 170 cm für einen geraden Abschnitt vergrößert wird. Auf diese Weise wird es ermöglicht, einen seitlichen Versatz, welcher bei einem Anheben oder einem Absenken von Fahrdrähten eines Kettenwerks entsteht, aufwandsgünstig klein zu halten.

In einer vorteilhaften Ausführungsvariante wird vorgeschlagen, dass dieser vertikale Stützpunktabstand zwischen dem Fahrdraht und dem Tragseil an dem besagten Mast mindestens 60 cm und höchstens 120 cm beträgt. In der Praxis hat sich gezeigt, dass so der seitliche Versatz der Fahrdrähte beim Anheben oder beim Absenken auf eine wirtschaftlich effiziente Weise klein gehalten werden kann.

Eine vorteilhafte Ausführungsform sieht vor, dass Kettenwerke eines Kettenwerkspaars mittels unterschiedlicher Haltevorrichtungen der mehreren Haltevorrichtungen mit einem Halterabstand voneinander beabstandet mit dem Mastsystem verbunden sind. Hierbei weist eine Verbindungsvorrichtung eines Kettenwerks des Kettenwerkspaars, welche entlang eines Verlaufs des Fahrdrahts des Kettenwerks in dem Krümmungsabschnitt unmittelbar auf die mit dem Fahrdraht verbundene Haltevorrichtung des Mastsystems folgend angeordnet ist, entlang des Verlaufs des Fahrdrahts einen Abstand zu dieser Haltevorrichtung aus einem Wertebereich auf, welcher das Maß des Halteabstands zuzüglich 70 cm nicht unterschreitet und das Maß des Halterabstands zuzüglich 220 cm nicht überschreitet. Der Halterabstand kann beispielsweise einen Wert aus einem Wertebereich von einschließlich 1 m bis hin zu 10 m betragen. Insbesondere ist dieser genannte Halterabstand von dem Regelabstand getrennt zu betrachten. Eine Lage der Fahrtdrähte der Kettenwerke relativ zu einem Straßenverlauf kann auf diese Weise einfach konstruktiv angepasst werden.

Eine weitere vorteilhafte Ausführungsform sieht vor, dass Masten in dem Krümmungsabschnitt derart angeordnet sind, dass diejenigen Masten, mit denen eines der Kettenwerke der mehreren Kettenwerke verbunden ist, einen Mastabstand von einschließlich 30 m bis einschließlich 50 m, vorzugsweise von einschließlich 30 m bis einschließlich 40 m, zueinander aufweisen. Auf diese Weise können die Kettenwerke im Krümmungsabschnitt zuverlässig und betriebssicher angeordnet werden.

Eine vorteilhafte Weiterbildung sieht vor, dass zum Zwecke einer durchgehend elektrifizierten Oberleitung zwischen zwei Kettenwerken eines Kettenwerkspaars eine Stromverbindungsvorrichtung vorgesehen ist, welche einen befahrbaren Abschnitt eines Fahrdrahts eines ersten Kettenwerks des Kettenwerkspaars mit einem unbefahrbaren Abschnitt eines Fahrdrahts eines zweiten Kettenwerks des Kettenwerkspaars verbindet. Dies erfolgt dadurch, dass diese Stromverbindungsvorrichtung derart entlang eines Abschnitts des Tragseils des ersten Kettenwerks sowie derart entlang eines Abschnitts des Tragseils des zweiten Kettenwerks angeordnet ist, dass die Stromverbindungsvorrichtung entlang dieses jeweiligen Abschnitts eine Länge aufweist, welche einer maximalen temperaturbedingten Längenänderung des Fahrdrahts des ersten oder des zweiten Kettenwerks entspricht. Des Weiteren wird dies dadurch realisiert, dass zwischen den Tragseilen des ersten und des zweiten Kettenwerks eine Schlaufe mit einer Abschnittslänge vorgesehen ist, welche zumindest 130 cm, bevorzugt zumindest 175 cm, aufweist. Unter einer maximalen temperaturbedingten Längenänderung soll im vorliegenden Zusammenhang eine aufgrund eines Betriebstemperaturbereichs, eines Längenausdehnungskoeffizienten des Fahrdrahts sowie einer Nachspannlänge des Fahrdrahts bedingte maximal zu erwartende Längenausdehnung des jeweiligen Fahrdrahts verstanden werden. Der Betriebstemperaturbereich bestimmt sich hierbei durch üblicherweise zu erwartende Umgebungstemperaturen. Eine Nachspannlänge des Fahrdrahts bemisst sich als eine Länge zwischen zwei Abspannmasten. Der Längenausdehnungskoeffizient ist im Wesentlichen von einer Wahl des Materials des Fahrdrahts abhängig. So kann weitestgehend verhindert werden, dass aufgrund einer temperaturbedingten Längenänderung der Stromverbindungsvorrichtung eine Kollision der Stromverbindungsvorrichtung mit Bestandteilen der Kettenwerke oder mit Fahrzeugen oder deren Stromabnehmern auftreten.

Eine vorteilhafte Ausführungsvariante sieht vor, dass zum Zwecke einer durchgehend elektrifizierten Oberleitung zwischen zwei Kettenwerken eines Kettenwerkspaars eine Stromverbindungsvorrichtung vorgesehen ist. Diese Stromverbindungsvorrichtung verbindet einen befahrbaren Abschnitt eines Fahrdrahts eines ersten Kettenwerks des Kettenwerkspaars mit einem unbefahrbaren Abschnitt eines Fahrdrahts eines zweiten Kettenwerks des Kettenwerkspaars. Dies erfolgt dadurch, dass die Stromverbindungsvorrichtung ausgehend von dem befahrenen Abschnitt des Fahrdrahts entlang eines Abschnitts des Tragseils des ersten Kettenwerks über eine Länge von zumindest 50 cm, bevorzugt von zumindest 75 cm, angeordnet ist. Hierbei entspricht die genannte Länge etwa einer maximalen temperaturbedingten Längenänderung des Fahrdrahts des entsprechenden Kettenwerks in einer gemäßigten Klimazone mit einem aus Kupfer ausgebildeten Fahrdraht. Daraufhin weist die Stromverbindungsvorrichtung zwischen den Tragseilen des ersten und des zweiten Kettenwerks des Kettenwerkspaars eine Schlaufe mit einer Abschnittslänge der Stromverbindungsvorrichtung von zumindest 130 cm, bevorzugt von zumindest 165 cm, auf. Weiter ist die Stromverbindungsvorrichtung entlang eines Abschnitts des Tragseils des zweiten Kettenwerks über eine Länge von zumindest 50 cm, bevorzugt von zumindest 75 cm, angeordnet. Hierbei entspricht die genannte Länge, wie bereits zuvor beschrieben, etwa einer maximalen temperaturbedingten Längenänderung des Fahrdrahts des entsprechenden Kettenwerks in einer gemäßigten Klimazone mit einem aus Kupfer ausgebildeten Fahrdraht. Zuletzt wird der Stromverbindungdraht von dem Tragseil des zweiten Kettenwerks hin zu dem unbefahrbaren Abschnitt des Fahrdrahts des zweiten Kettenwerks geführt. Auf diese Weise kann eine elektrische Verbindung der Fahrdrähte eines Kettenwerkspaars auf eine betriebssichere Art und Weise realisiert werden. Die Betriebssicherheit kann weiter verbessert werden, indem die Stromverbindungsvorrichtung ausgehend von einer Verbindungsvorrichtung, welche mit dem befahrenen Fahrdraht verbunden ist, angeordnet wird.

Mittels des erfindungsgemäßen Verfahrens kann das erfindungsgemäße Oberleitungssystem erstellt werden.

Hierzu werden mehrere Kettenwerke, welche jeweils einen mittels mehreren Verbindungsvorrichtungen mit einem Tragseil verbundenen Fahrdraht aufweisen, anhand von Parallelfeldern zu einer durchgehend befahrbaren Oberleitung angeordnet. Des Weiteren wird wenigstens eine Oberleitung in einem Krümmungsabschnitt derart angeordnet, dass deren vertikale Projektion in eine horizontale Ebene einen gekrümmten Verlauf aufweist. Zudem wird in dem Krümmungsabschnitt wenigstens ein gekrümmtes Parallelfeld derart angeordnet, dass dessen vertikale Projektion in die horizontale Ebene in dem Krümmungsabschnitt dem genannten gekrümmten Verlauf der Projektion, der wenigstens einen Oberleitung folgt. Dies ermöglicht eine Erstellung einer durchgehend befahrbaren Oberleitung entlang eines vorgegebenen Straßenverlaufs.

In einer vorteilhaften Weiterbildung des Verfahrens wird die wenigstens eine Oberleitung derart über einer Fahrbahn positioniert, dass die Fahrdrähte der mehreren Kettenwerke im Wesentlichen parallel zu einer Fahrspurmitte verlaufen. Des Weiteren wird wenigstens ein gerades Parallelfeld vorgesehen, dessen vertikale Projektion in die horizontale Ebene einem im Wesentlichen geraden Verlauf einer Projektion, der wenigstens einen Oberleitung in die horizontale Ebene folgt. Zudem wird eine Position von Fahrdrähten entlang des gekrümmten Parallelfelds in Abhängigkeit einer Krümmung des Krümmungsabschnitts relativ zu einer Position von Fahrdrähten entlang des geraden Parallelfelds transversal in horizontaler Richtung versetzt angeordnet. Insbesondere ist der genannte Versatz derart abhängig von einer Krümmung des Krümmungsabschnitts, dass der Versatz umso größer gewählt wird, je stärker der Krümmungsabschnitt gekrümmt ist. Vorzugsweise beschreibt der Krümmungsabschnitt einen Kreisbogen. Dieser Kreisbogen weist eine Krümmung auf, welche von einem zugehörigen Kreisradius abhängig ist. Beispielsweise weist der genannte Versatz bei dem Kreisradius von etwa 800 m mindestens 5 cm, bevorzugt mindestens 10 cm auf. Dieser Versatz wird mit steigendem Krümmungsradius reduziert. Beispielsweise ist denkbar, dass dieser Versatz linear reduziert wird. Auf diese Weise kann eine Seitenlagenverschiebung der Fahrdrähte, welche beispielsweise bei einem Anheben oder Absenken der Fahrdrähte oder während eines Betriebs auftritt, einfach ausgeglichen werden. Vorzugsweise werden die Fahrdrähte entlang des gekrümmten Parallelfelds nach innen, hin zu einer stärkeren Krümmung, versetzt in transversaler horizontaler Richtung angeordnet. Dies hat sich zur Erfüllung der strengen Lagevorgaben für die nicht spurgebundene Elektrifizierung von Straßenfahrzeugen bewährt.

In einer vorteilhaften Ausführungsvariante werden mehrere gerade Parallelfelder vorgesehen. Hierbei werden die Fahrdrähte entlang des gekrümmten Parallelfelds relativ zu der Fahrspurmitte im Vergleich zu den Fahrdrähten entlang aller der mehreren geraden Parallelfelder relativ zu der Fahrspurmitte transversal in horizontaler Richtung versetzt angeordnet.

Die voranstehend beschriebenen Eigenschaften, Merkmale und Vorteile der Erfindung sowie die Art und Weise, wie diese erreicht werden, werden im Zusammenhang mit den Figuren in der folgenden Beschreibung eines Ausführungsbeispiels der Erfindung näher erläutert. Soweit zweckdienlich, werden in den Figuren dieselben Bezugszeichen für dieselben oder einander entsprechende Elemente der Erfindung verwendet. Das Ausführungsbeispiel dient der Erläuterung der Erfindung und beschränkt die Erfindung nicht auf die darin angegebenen Kombinationen von Merkmalen, auch nicht in Bezug auf funktionale Merkmale. Zudem können alle in dem Ausführungsbeispiel angegebenen Merkmale isoliert betrachtet und in geeigneter Weise mit den Merkmalen eines beliebigen Anspruchs kombiniert werden.

Es zeigen:
- FIG 1a: eine Seitenansicht eines Ausführungsbeispiels des erfindungsgemäßen Oberleitungssystems als schematische Darstellung sowie eine Illustration eines Beispiels des erfindungsgemäßen Verfahrens;
- FIG 1b: das Ausführungsbeispiel des Oberleitungssystems gezeigt in einer schematischen Darstellung als eine Projektion in eine horizontale Ebene sowie eine Illustration des Beispiels des Verfahrens;
- FIG 2: eine stark vereinfachte schematische Darstellung, welche beispielhaft nicht maßstabsgetreu eine Anordnung von Verbindungsvorrichtungen relativ zueinander und relativ zu Haltevorrichtungen eines Mastsystems zeigt;
- FIG 3: eine Schnittebene durch das in FIG 1a und FIG 1b gezeigte Oberleitungssystem senkrecht zu einer Längserstreckungsrichtung einer Oberleitung und ein Beispiel einer gekrümmten Verbindungsvorrichtung;
- FIG 4: eine weitere Schnittebene durch das Oberleitungssystem senkrecht zu einer Längserstreckungsrichtung einer Oberleitung und ein Beispiel einer gekröpften Verbindungsvorrichtung für einen Einsatz mit einer Neigung von 50° bis 70°, ergänzt um eine beispielhafte schematische Darstellung einer Lage von Fahrdrähten und zugehörigen Tragseilen in einem Schnitt durch ein gerades Parallelfeld zu Illustration des Beispiels des erfindungsgemäßen Verfahrens;
- FIG 5: eine andere weitere Schnittebene durch das in FIG 1a und FIG 1b gezeigte Oberleitungssystem senkrecht zu einer Längserstreckungsrichtung einer Oberleitung und ein Beispiel einer geraden Verbindungsvorrichtung;
- FIG 6: ein Ausführungsbeispiel einer Stromverbindungsvorrichtung in einer schematischen Darstellung.

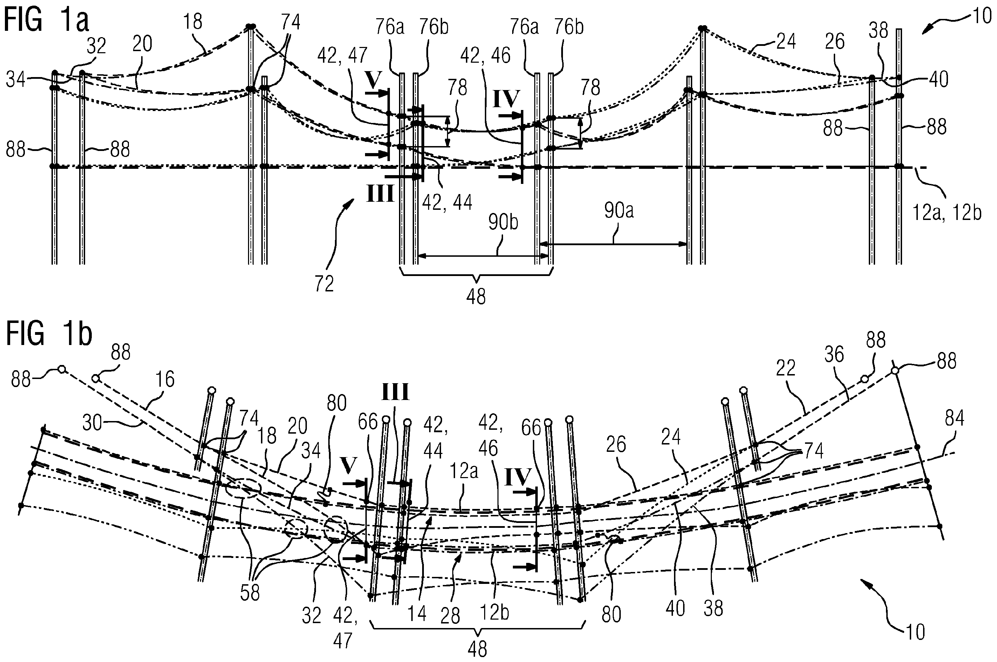

FIG 1a und FIG 1b zeigen einen Krümmungsabschnitt eines Oberleitungssystems 10, welches dazu eingerichtet ist, eine elektrische Energie für ein elektrisch angetriebenes Fahrzeug mittels zwei Oberleitungen 12a, 12b bereitzustellen. Im vorliegenden Ausführungsbeispiel weist das Oberleitungssystem 10 zwei Oberleitungen 12a, 12b unterschiedlicher Polarität auf. Des Weiteren weist das Oberleitungssystem 10 mehrere Kettenwerke 16, 22, 30, 36 auf, welche jeweils einen mittels mehreren Verbindungsvorrichtungen 42, 44, 46, 47 mit einem Tragseil 18, 24, 32, 38 verbundenen Fahrdraht 20, 26, 34, 40 aufweisen. Die mehreren Kettenwerke 16, 22, 30, 36 sind anhand von Parallelfeldern 48, 50 zu einer ersten durchgehend befahrbaren Oberleitung 12a und einer zweiten durchgehend befahrbaren Oberleitung 12b unterschiedlicher Polarität angeordnet. Im vorliegenden Ausführungsbeispiel weisen die Fahrdrähte 20, 26, 34, 40 und Tragseile 18, 24, 32, 38 jedes Kettenwerks der mehreren Kettenwerke 16, 22, 30, 36 des Oberleitungssystems 10 eine vorgegebene Zugspannung auf. Diese wird dadurch erzeugt, dass die mehreren Kettenwerke 16, 22, 30, 36 des Oberleitungssystems 10 in regelmäßigen Abständen zu sogenannten Abspannmasten 88 geführt werden. Im vorliegenden Ausführungsbeispiel weisen die Fahrdrähte 20, 26, 34, 40 und Tragseile 18, 24, 32, 38 eine Länge von etwa 1,5 km auf, nach welchen diese abgespannt werden. Diese Länge wird in Fachkreisen auch Nachspannlänge genannt. Um hierbei eine durchgehend befahrbare Oberleitung 12a, 12b zu erhalten, werden die mehreren Kettenwerke 16, 22, 30, 36 des Oberleitungssystems 10 anhand von Parallelfeldern 48, 50 zu der ersten durchgehend befahrbaren Oberleitung 12a und der zweiten durchgehend befahrbaren Oberleitung 12b angeordnet. Des Weiteren sind die mehreren Kettenwerke 16, 22, 30, 36 des Oberleitungssystems 10 an einem Mastsystem 72 des Oberleitungssystems 10 aufgehängt. Die zuvor genannten Abspannmasten 88 sind neben weiteren Masten 76a, 76b sowie mehreren Haltevorrichtungen 74 Bestandteil des Mastsystems 72. Insbesondere handelt es sich bei den Bestandteilen des Mastsystems 72 um einer Fachperson bereits bekannte Abspannmasten 88, Masten 76a, 76b sowie Haltevorrichtungen 74.

Neben dem in FIG 1a und FIG 1b gezeigten Krümmungsabschnitt des Oberleitungssystems 10 weist das Oberleitungssystem 10 weitere nicht näher dargestellte Abschnitte auf. FIG 1a zeigt eine Seitenansicht des Krümmungsabschnitts. Hierbei ist schematisch dargestellt, wie ein erstes Kettenwerkspaar 14 und ein zweites Kettenwerkspaar 28 mittels der mehreren Haltevorrichtungen 74 mit dem Mastsystem 72 verbunden sind. FIG 1b zeigt eine vertikale Projektion des Krümmungsabschnitts in eine horizontale Ebene. In dieser horizontalen Ebene weist die erste Oberleitung 12a sowie die zweite Oberleitung 12b einen gekrümmten Verlauf auf. Zudem illustriert FIG 1b, dass im vorliegenden Ausführungsbeispiel die zwei Oberleitungen 12a, 12b derart über einer Fahrbahn positioniert werden, dass die Fahrdrähte 20, 26, 34, 40 der beiden zuvor genannten Kettenwerkspaare 14, 28 im Krümmungsabschnitt im Wesentlichen parallel zu einer Fahrspurmitte 84 einer nicht näher dargestellten Fahrbahn verlaufen. Im vorliegenden Ausführungsbeispiel entspricht der gekrümmte Verlauf der Fahrspurmitte 84 einem Kreisbogen, welcher in einem radialen Abstand von etwa 800 m zum Kreismittelpunkt verläuft. Die beiden Oberleitungen 12a, 12b folgen im vorliegenden Ausführungsbeispiel der Fahrspurmitte 84.

Des Weiteren zeigen FIG 1a und FIG 1b ein gekrümmtes Parallelfeld 48. Das gekrümmte Parallelfeld 48 ist in dem Krümmungsabschnitt derart angeordnet, dass dessen vertikale Projektion in die in FIG 1b gezeigte horizontale Ebene dem genannten gekrümmten Verlauf der Projektion der Oberleitungen 12a, 12b in diese horizontale Ebene und somit der Fahrspurmitte 84 folgt. Des Weiteren zeigt FIG 1b schematisch, dass das erste Kettenwerkspaar 14, bestehend aus dem ersten Kettenwerk 16 und dem zweiten Kettenwerk 22, anhand des gekrümmten Parallelfelds 48 zur durchgehend befahrbaren ersten Oberleitung 12a angeordnet ist. Das erste Kettenwerk 16 weist einen ersten Fahrdraht 20 und ein erstes Tragseil 18 auf. Das zweite Kettenwerk 22 weist einen zweiten Fahrdraht 26 und ein zweites Tragseil 24 auf. Ferner zeigt FIG 1b, dass ein zweites Kettenwerkspaar 28 zu der durchgehend befahrbaren zweiten Oberleitung 12b anhand des Parallelfelds 48 angeordnet ist. Das zweite Kettenwerkspaar 28 weist ein drittes Kettenwerk 30 sowie ein viertes Kettenwerk 36 auf. Das dritte Kettenwerk 30 weist einen dritten Fahrdraht 34 und ein drittes Tragseil 32 auf. Das vierte Kettenwerk 36 weist einen vierten Fahrdraht 40 und ein viertes Tragseil 38 auf.

Im vorliegenden Ausführungsbeispiel sind die Fahrdrähte 20, 34 sowie Tragseile 18, 32 des ersten und des dritten Kettenwerks 16, 30 mittels je einer der mehreren Haltevorrichtungen 74 unmittelbar mit den Masten erster Art 76a verbunden. Des Weiteren sind die Fahrdrähte 26, 40 sowie Tragseile 24, 38 des zweiten und vierten Kettenwerks 22, 36 mittels je einer der mehreren Haltevorrichtungen 74 unmittelbar mit den Masten zweiter Art 76b verbunden. Mittels der Haltevorrichtungen 74 sind die jeweiligen Fahrdrähte 20, 26, 34, 40 und Tragseile 18, 24, 32, 38 derart mit den entsprechenden Masten 76a, 76b verbunden, dass ein vertikaler Stützpunktabstand 78 zwischen dem Fahrdraht 20, 26, 34, 40 und Tragseil 18, 24, 32, 38 des jeweiligen Kettenwerks 16, 22, 30, 36 an dem entsprechenden Mast erster Art 76a oder zweiter Art 76b bei dem im vorliegenden Ausführungsbeispiel betrachteten Kreisbogens mit einem Kreisradius von etwa 800 m einen Wert von 60 cm bis 80 cm beträgt. FIG 1a zeigt des Weiteren, dass die Masten erster Art 76a im vorliegenden Ausführungsbeispiel einen Mastabstand 90a von einschließlich 40 m bis einschließlich 50 m zueinander aufweisen. Ferner zeigt FIG 1a, dass die Masten zweiter Art 76b einen Mastabstand 90b von einschließlich 40 m bis einschließlich 50 m zueinander aufweisen. Die Abstände von direkt nebeneinander angeordneten Masten erster Art 76a und zweiter Art 76b beträgt im vorliegenden Ausführungsbeispiel etwa 2 m. Zudem beträgt ein Halterabstand 92 zwischen einer nicht näher dargestellten Haltevorrichtung 74, welche mit dem Masten erster Art 76a und einer weiteren nicht näher dargestellten Haltevorrichtung 74, welche mit dem 2 m zu dem Masten erster Art 76a beabstandet angeordnetem Masten zweiter Art 76b verbunden ist, dasselbe Maß, nämlich 2 m.

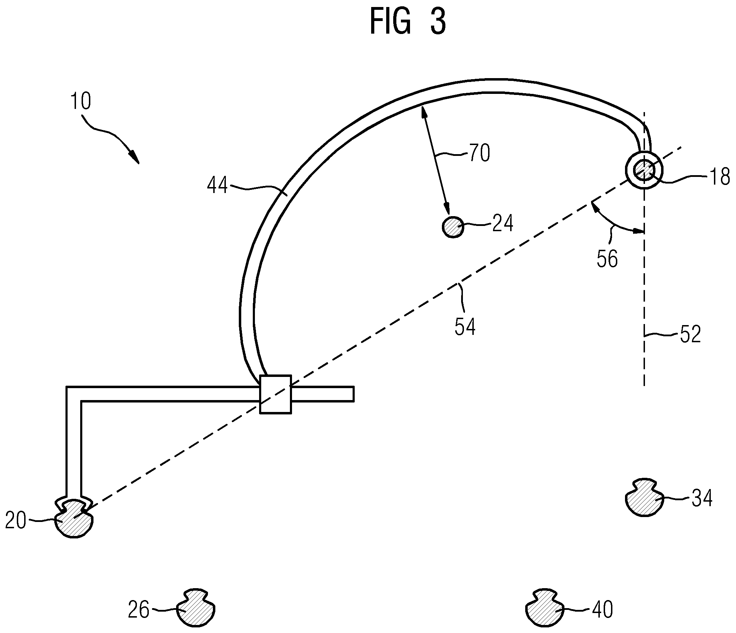

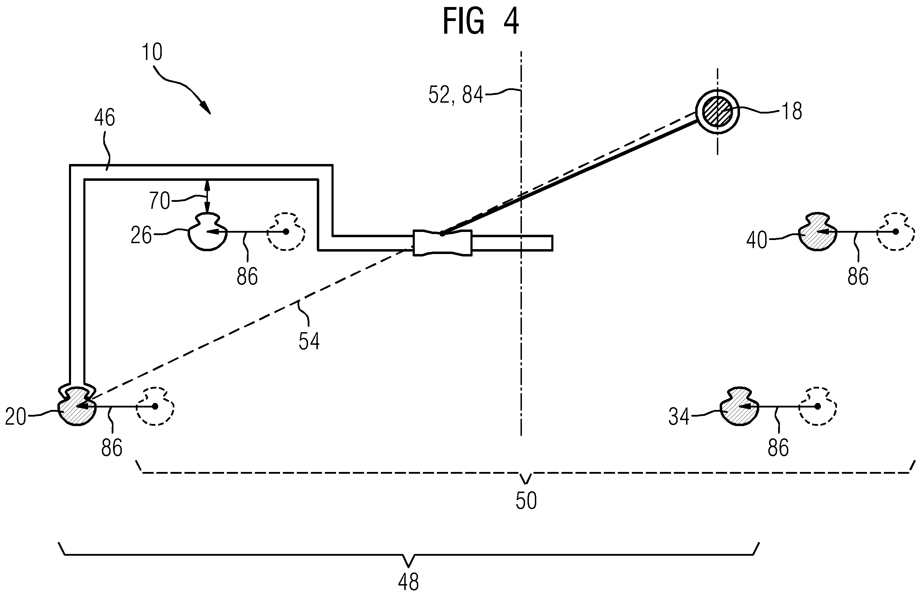

Entlang des Krümmungsabschnitts sind die Kettenwerke 16, 22, 30, 36 der beiden Kettenwerkspaare 14, 28 derart ausgebildet, dass die jeweiligen Fahrdrähte 20, 26, 34, 40 und die jeweiligen Tragseile 18, 24, 32, 38 windschief zueinander angeordnet sind. Hierbei schließen der Fahrdraht 20, 26, 34, 40 und das Tragseil 18, 24, 32, 38 des jeweiligen Kettenwerks 16, 22, 30, 36 einen Winkel 56 ein, dessen Wertebereich von ≥ 9° bis ≤ 70° reicht (vgl. FIG 3 und FIG 4). Dieser Winkel 56 ergibt sich in einer Ebene, welche senkrecht zu einer Längserstreckungsrichtung der Oberleitungen 12a, 12b verläuft und in welcher eine lotrechte Achse 52 und eine gerade Verbindungslinie 54 zwischen dem jeweiligen Fahrdraht 20, 26, 34, 40 und dem jeweiligen Tragseil 18, 24, 32, 38 des jeweiligen Kettenwerks 16, 22, 30, 36 verläuft. Dieser Winkel 56 ist exemplarisch in einer schematischen Darstellung in der Figur FIG 3 gezeigt, welche zudem beispielhaft eine gekrümmte Verbindungsvorrichtung 44 zeigt.

Wie weiter in FIG 1b schematisch dargestellt, kreuzen sich in dem Krümmungsabschnitt vertikale Projektionen der Fahrdrähte 20, 26, 34, 40 und Tragseile 18, 24, 32, 38 der beiden Kettenwerkspaare 14, 28 in die in FIG 1b gezeigten horizontale Ebene jeweils in Kreuzungsbereichen 58. Im vorliegenden Ausführungsbeispiel sind der dritte Fahrdraht 34, das dritte Tragseil 32, der zweite Fahrdraht 26 sowie das zweiten Tragseil 24 derart in Kreuzungsbereichen 58 angeordnet, dass das dritte Tragseil 32 und der dritte Fahrdraht 34 oberhalb des zweiten Fahrdrahts 26 und des zweiten Tragseils 24 angeordnet sind. Ferner sind im vorliegenden Ausführungsbeispiel der erste Fahrdraht 20 und das erste Tragseil 18 in einem Kreuzungsbereich 58, in welchem diese den vierten Fahrdraht 40 und das vierte Tragseil 38 kreuzen, oberhalb des vierten Tragseils 38 und des vierten Fahrdrahts 40 angeordnet.

Die mehreren Verbindungsvorrichtungen 42, 44, 46, 47 der Kettenwerke 16, 22, 30, 36 sind der Fachperson bereits bekannt und aus Gründen der Übersichtlichkeit in FIG 1a und FIG 1b lediglich beispielhaft dargestellt. Der Fachperson sind solche Verbindungsvorrichtungen 42, 44, 46, 47 ferner unter der Bezeichnung "Hänger" geläufig.

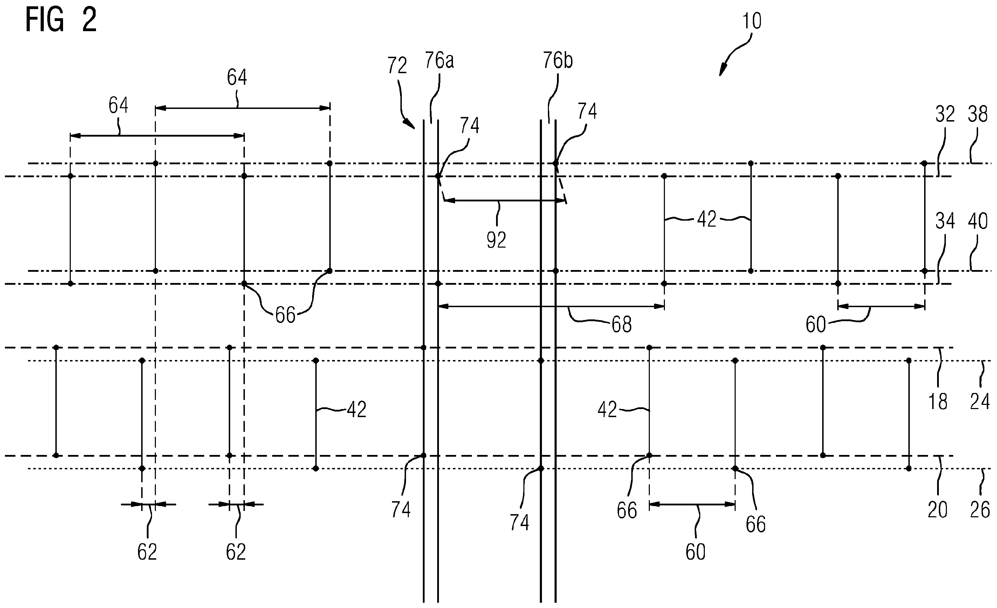

FIG 2 zeigt beispielhaft einen Ausschnitt, aus dem in FIG 1a und FIG 1b gezeigten Krümmungsabschnitt in einer stark vereinfachten, schematischen Darstellung, um die Anordnung der mehreren Verbindungsvorrichtungen 42, 44, 46, 47 relativ zueinander sowie relativ zu dem Mastsystem 72 zu erläutern. Die mehreren Verbindungsvorrichtungen 42, 44, 46, 47 eines der Kettenwerke 16, 22, 30, 36 sind derart mit dem Fahrdraht 20, 26, 34, 40 des jeweiligen Kettenwerks 16, 22, 30, 36 verbunden, dass Verbindungsstellen 66 unmittelbar benachbarter Verbindungsvorrichtungen der mehreren Verbindungsvorrichtungen 42, 44, 46, 47 mit dem jeweiligen Fahrdraht 20, 26, 34, 40 einen Regelabstand 64 von einschließlich etwa 300 cm zueinander aufweisen. Dieser Regelabstand 64 wird entlang eines jeden Kettenwerkes 16, 22, 30, 36 in einem Abschnitt realisiert, welcher jeweils zwischen den Masten 76a, 76b verläuft. Abweichend davon weist eine Verbindungsstelle 66 einer Verbindungsvorrichtung der mehreren Verbindungsvorrichtungen 42, 44, 46, 47 eines der Kettenwerke 16, 22, 30, 36, welche entlang eines Verlaufs des zugehörigen Fahrdrahts 20, 26, 34, 40 unmittelbar auf eine Haltevorrichtung 74 des Mastsystems 72 folgend angeordnet ist, entlang eines Verlaufs des entsprechenden Fahrdrahts 20, 26, 34, 40, einen Abstand 68 von 270 cm zu dieser Haltevorrichtung 74 auf. Dieser Abstand 68 ergibt sich aus dem Halterabstand 92 zuzüglich eines Werts von 70 cm. Des Weiteren weisen im vorliegenden Ausführungsbeispiel Verbindungsvorrichtungen 42, 44, 46, 47 unterschiedlicher Kettenwerke 16, 22, 30, 36 eines der Kettenwerkspaare 14, 28 in dem Krümmungsabschnitt einen Mindestabstand 60 von 130 cm zueinander auf. Dieser Mindestabstand 60 ergibt sich aus einer Halbierung des Regelabstands 64 von 300 cm abzüglich eines Werts von 20 cm. Zudem weisen im vorliegenden Ausführungsbeispiel Verbindungsvorrichtungen 42, 44, 46, 47 von Kettenwerken 16, 22, 32, 36 unterschiedlicher Kettenwerkspaare 14, 28 einen Mindestabstand 62 von 30 cm zueinander auf.

In FIG 3 ist beispielhaft für eine der mehreren Verbindungsvorrichtungen 42 eine gekrümmte Verbindungsvorrichtung 44 schematisch dargestellt. Die gezeigte gekrümmte Verbindungsvorrichtung 44 ist Teil des ersten Kettenwerks 16 und verbindet das erste Tragseil 18 mit dem ersten Fahrdraht 20. Die gekrümmte Verbindungsvorrichtung 44 weist einen gekrümmten Abschnitt auf, welcher in jedem seiner Punkte mindestens einem lichten Abstand 70 von 5 cm zu dem zweiten Tragseil 24 aufweist. FIG 3 zeigt, wie bereits vorhergehend beschrieben, eine Ebene, welche senkrecht zu einer Längserstreckungsrichtung der Oberleitungen 12a, 12b verläuft. In dieser Ebene verläuft zudem eine gerade Verbindungslinie 54 zwischen dem ersten Fahrdraht 20 und dem ersten Tragseil 18 und eine lotrechte Achse 52. Beispielhaft schließen hierbei die gerade Verbindungslinie 54 und die lotrechte Achse 52 einen Winkel 56 von etwa 56° ein.

FIG 4 zeigt ein weiteres Beispiel für die mehreren Verbindungsvorrichtungen 42 in Form einer gekröpften Verbindungsvorrichtung 46. Die gekröpfte Verbindungsvorrichtung 46 weist einen gekröpften Abschnitt auf und verbindet einen befahrbaren Abschnitt des ersten Fahrdrahts 20 mit dem ersten Tragseil 18. Hierbei ist der erste Fahrdraht 20 entlang des Krümmungsabschnitts innenliegend angeordnet. Der gekröpfte Abschnitt der gekröpften Verbindungsvorrichtung 46 ist hierbei derart angeordnet, dass dieser in jedem seiner Punkte mindestens einen lichten Abstand 70 von 5 cm zu einem unbefahrbaren Abschnitt des zweiten Fahrdrahts 26 aufweist. Der unbefahrbare Abschnitt des zweiten Fahrdrahts 26 ist hierbei höher als der befahrbare Abschnitt des ersten Fahrdrahts 20 angeordnet, sodass ein Übertrag einer elektrischen Energie zu einem nicht näher dargestellten Stromabnehmer, insbesondere zu einem nicht näher dargestellten Pantographen, verhindert ist.

Des Weiteren illustriert FIG 4 eine Anordnung der Fahrdrähte 20, 26, 34, 40 entlang des gekrümmten Parallelfelds 48 relativ zur Fahrspurmitte 84. Ebenfalls ist in FIG 4 schematisch die Anordnung von Fahrdrähten eines geraden Parallelfelds 50 des Oberleitungssystems 10 in gestrichelter Darstellung eingefügt. Im Gegensatz zu dem gekrümmten Parallelfeld 48 folgt eine vertikale Projektion eines geraden Parallelfelds 50 in eine horizontale Ebene einem im Wesentlichen geraden Verlauf einer Projektion der Oberleitungen 12a, 12b in diese horizontale Ebene. Anhand von FIG 4 wird illustriert, dass die Fahrdrähte 20, 26, 34, 40 entlang des gekrümmten Parallelfelds 48, welches einem Kreisbogen mit einem zugehörigen Kreisradius von etwa 800 m folgt, im Vergleich zu Fahrdrähten entlang des geraden Parallelfelds 50 relativ zur Fahrspurmitte 84 transversal in horizontaler Richtung 86 um etwa 10 cm versetzt angeordnet sind.

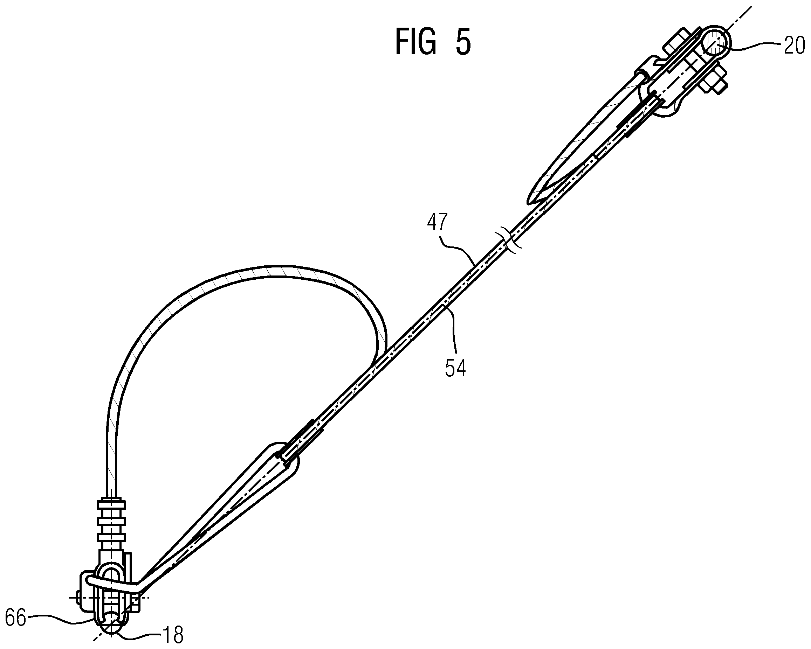

Ferner ist in FIG 5 ein weiteres Beispiel einer der mehreren Verbindungsvorrichtungen 42 in Form einer geraden Verbindungsvorrichtung 47 schematisch dargestellt. Diese gerade Verbindungsvorrichtung 47 ist dazu vorgesehen, in dem Krümmungsabschnitt außerhalb des gekrümmten Parallelfelds 48 angeordnet zu werden. Beispielhaft verbindet die gerade Verbindungsvorrichtung 47 das erste Tragseil 18 mit dem ersten Fahrdraht 20 und folgt dabei einer geraden Verbindungslinie 54 zwischen dem ersten Fahrdraht 20 und dem ersten Tragseil 18. Mittels der gezeigten geraden Verbindungsvorrichtung 47 wird eine bauraumeffiziente Anordnung ermöglicht, bei welcher Kollisionen mit Fahrdrähten 26, 34, 40 oder Tragseilen 24, 32, 38 der weiteren Kettenwerke 22, 30, 36 verhindert werden kann.

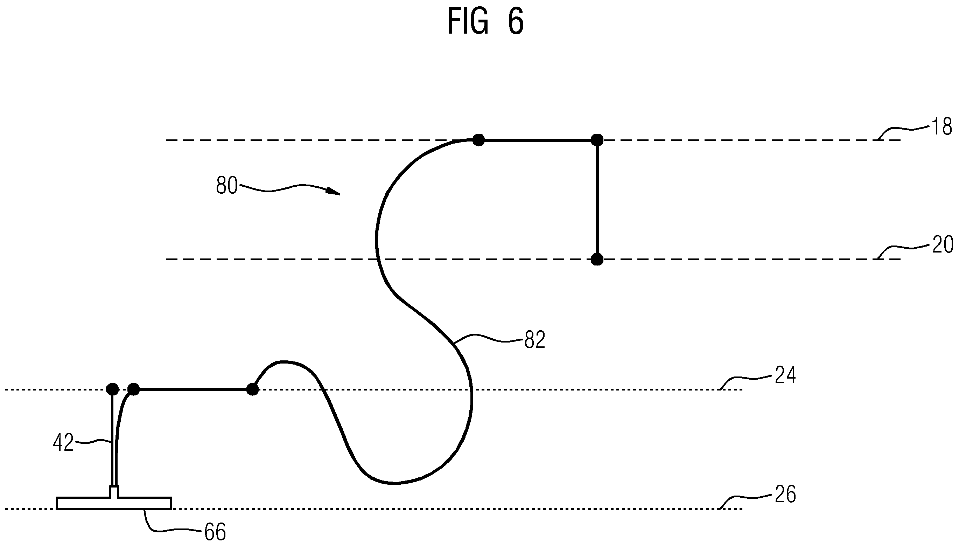

FIG 6 zeigt beispielhaft eine Stromverbindungsvorrichtung 80 des Oberleitungssystems 10, welche dazu eingerichtet ist, eine elektrische Verbindung zwischen Fahrdrähten 20, 26, 34, 40 eines Kettenwerkspaars 14, 28 herzustellen. Insgesamt sind im vorliegenden Ausführungsbeispiel sechs Stromverbindungsvorrichtungen 80 vorgesehen, von denen zwei beispielhaft in FIG 1b schematisch dargestellt sind. Mittels der sechs Stromverbindungsvorrichtungen 80 sind die Fahrdrähte 20, 26, 34, 40 eines Kettenwerkspaars 14, 28 jeweils einmal kurz vor und einmal kurz nach den Masten 76a, 76b, zwischen welchen das gekrümmte Parallelfeld 48 angeordnet ist, elektrisch miteinander verbunden. Zudem ist zum Zwecke eines Potentialausgleichs in einem Kreuzungsbereich 58, in welchem sich Fahrdrähte 20, 26, 34, 40 unterschiedlicher Kettenwerkspaare 14, 28 kreuzen, eine Stromverbindungsvorrichtung 80 vorgesehen. Allen Stromverbindungsvorrichtungen 80 liegt im Wesentlichen derselbe Aufbau zugrunde, welcher im Folgenden beispielhaft anhand des ersten Kettenwerkspaars 14 erläutert wird.

Im vorliegenden Ausführungsbeispiel weist die Stromverbindungsvorrichtung 80 einen flexiblen elektrischer Leiter auf. Der flexible elektrische Leiter der Stromverbindungsvorrichtung 80 ist ausgehend von dem befahrenen Abschnitt des zweiten Fahrdrahts 26 entlang eines Abschnitts des zweiten Tragseils 24 über eine Länge von etwa 75 cm entlang dieses Abschnitts angeordnet. Daraufhin weist der flexible elektrische Leiter der Stromverbindungsvorrichtung 80 eine Schlaufe 82 mit einer Abschnittslänge von etwa 165 cm auf. Auf die Schlaufe 82 folgend wird der flexible elektrische Leiter der Stromverbindungsvorrichtung 80 entlang eines Abschnitts des ersten Tragseils 18 über eine Länge von 75 cm entlang dieses Abschnitts angeordnet. Auf den letztgenannten Abschnitt folgend wird die erste Stromverbindungsvorrichtung 80 sodann zu dem unbefahrbaren Abschnitt des ersten Fahrdrahts 20 geführt und mit diesem elektrisch verbunden. Eine Länge des Abschnitts des elektrischen Leiters der Stromverbindungsvorrichtung 80 entlang des jeweiligen Tragseils 18, 24 entspricht einer maximalen temperaturbedingten Längenänderung eines Fahrdrahts 20, 26, 34, 40 eines Kettenwerkspaars 14, 28. Zur Bestimmung dieser Länge liegen die im vorliegenden Ausführungsbeispiel realisierte Nachspannlänge von etwa 1,5 km, ein üblicher in einer mitteleuropäischen Klimazone auftretender Betriebstemperaturbereich sowie ein aus Kupfer ausgebildeter Fahrdraht zugrunde. Abweichende Nachspannlängen, Betriebstemperaturbereiche oder Materialien des Fahrdrahts führen zu einer veränderten maximalen temperaturbedingten Längenänderung.

## Patentansprüche

1. Oberleitungssystem (10) zur Bereitstellung einer elektrischen Energie für ein elektrisch angetriebenes Fahrzeug mittels einer Oberleitung (12a, 12b), aufweisend
- mehrere Kettenwerke (16, 22, 30, 36), welche jeweils einen mittels mehreren Verbindungsvorrichtungen (42, 44, 46, 47) mit einem Tragseil (18, 24, 32, 38) verbundenen Fahrdraht (20, 26, 34, 40) aufweisen und welche anhand von Parallelfeldern (48, 50) zu einer durchgehend befahrbaren Oberleitung (12a, 12b) angeordnet sind und
- wenigstens eine Oberleitung (12a, 12b), welche in einem Krümmungsabschnitt derart angeordnet ist, dass deren vertikale Projektion in einer horizontalen Ebene einen gekrümmten Verlauf aufweist,
**dadurch gekennzeichnet, dass**
das Oberleitungssystem (10) wenigstens ein gekrümmtes Parallelfeld (48) aufweist, welches in dem Krümmungsabschnitt derart angeordnet ist, dass dessen vertikale Projektion in die horizontale Ebene in dem Krümmungsabschnitt dem genannten gekrümmten Verlauf der Projektion der wenigstens einen Oberleitung (12a, 12b) folgt.

2. Oberleitungssystem (10) nach einem der vorherigen Ansprüche,
**dadurch gekennzeichnet, dass**
in dem Krümmungsabschnitt angeordnete Kettenwerke (16, 22, 30, 36) der mehreren Kettenwerke (16, 22, 30, 36) derart ausgebildet sind, dass eine in einer Ebene verlaufende, lotrechte Achse (52) und eine in derselben Ebene verlaufende, gerade Verbindungslinie (54) zwischen dem Fahrdraht (20, 26, 34, 40) und dem Tragseil (18, 24, 32, 38) eines jeweiligen Kettenwerks (16, 22, 30, 36) einen Winkel (56) einschließen, welcher ≥ 9 ° und ≤ 70 ° ist, wobei sich diese Ebene im Wesentlichen senkrecht zu einer Längserstreckungsrichtung der wenigstens einen Oberleitung (12a, 12b) erstreckt.

3. Oberleitungssystem (10) nach einem der vorherigen Ansprüche,
**dadurch gekennzeichnet, dass**
- die Fahrdrähte (20, 26, 34, 40) und Tragseile (18, 24, 32, 38) eines ersten und eines zweiten Kettenwerks der mehreren Kettenwerke (16, 22, 30, 36) in einem Kreuzungsbereich (58) derart angeordnet sind, dass Projektionen des Fahrdrahts (20, 26, 34, 40) und des Tragseils (18, 24, 32, 38) des ersten Kettenwerks (16, 22, 30, 36) in eine Horizontalebene Projektionen des Fahrdrahts (20, 26, 34, 40) und des Tragseils (18, 24, 32, 38) in die Horizontalebene kreuzen; und
- der Fahrdraht (20, 26, 34, 40) und das Tragseil (18, 24, 32, 38) des ersten Kettenwerks (16, 22, 30, 36) in dem Kreuzungsbereich (58) jeweils oberhalb des Fahrdrahts (20, 26, 34, 40) und des Tragseils (18, 24, 32, 38) des zweiten Kettenwerks (16, 22, 30, 36) angeordnet sind.

4. Oberleitungssystem (10) nach einem der vorherigen Ansprüche,
**dadurch gekennzeichnet, dass**
- jedes Kettenwerk der mehreren Kettenwerke (16, 22, 30, 36) einen Abschnitt aufweist, entlang dessen mehrere, unmittelbar zueinander benachbarte Verbindungsvorrichtungen (42, 44, 46, 47) des jeweiligen Kettenwerks (16, 22, 30, 36) derart voneinander beabstandet sind, dass deren Verbindungsstellen (66) mit dem Fahrdraht (20, 26, 34, 40) entlang des Verlaufs des Fahrdrahts (20, 26, 34, 40) denselben Regelabstand (64) zueinander aufweisen;
- die genannten Abschnitte der Kettenwerke (16, 22, 30, 36) derart in dem Krümmungsabschnitt angeordnet sind, dass Verbindungsvorrichtungen (42, 44, 46, 47) unterschiedlicher Kettenwerke (16, 22, 30, 36) eines Kettenwerkspaars (14, 28), welches anhand des gekrümmten Parallelfelds (48) zu einer durchgehend befahrbaren Oberleitung (12a, 12b) angeordnet ist, einen Mindestabstand (60) aus einem Wertebereich von einen halben Wert des Regelabstands (64) abzüglich 100 cm bis zu dem halben Wert des Regelabstands (64) zuzüglich 100 cm zueinander aufweisen.

5. Oberleitungssystem (10) nach Anspruch 4,
**dadurch gekennzeichnet, dass**
der Regelabstand (64) einen Wert aus einem Wertebereich von 270 cm bis 420 cm, vorzugsweise aus einem Wertebereich von 270 cm bis 330 cm, aufweist.

6. Oberleitungssystem (10) nach einem der vorherigen Ansprüche,
**dadurch gekennzeichnet, dass**
Verbindungsvorrichtungen (42, 44, 46, 47) der Kettenwerke (16, 22, 30, 36) unterschiedlicher Kettenwerkspaare (14, 28), welche jeweils anhand des gekrümmten Parallelfelds (48) zu einer durchgehend befahrbaren Oberleitung (12a, 12b) angeordnet sind, einen Mindestabstand (62) von 20 cm, vorzugsweise von 30 cm zueinander aufweisen.

7. Oberleitungssystem (10) nach einem der vorhergehenden Ansprüche,
**dadurch gekennzeichnet, dass**
eine Verbindungsvorrichtung (42, 44, 46, 47) zwischen einem befahrbaren Fahrdraht (20, 26, 34, 40) und einem Tragseil (18, 24, 32, 38) eines ersten Kettenwerks (16, 22, 30, 36) eines Kettenwerkspaars (14, 28), welches anhand des gekrümmten Parallelfelds (48) zu einer durchgehend befahrbaren Oberleitung (12a, 12b) angeordnet ist, einen gekröpften Abschnitt aufweist, welcher derart angeordnet ist, dass der gekröpfte Abschnitt in jedem seiner Punkte mindestens einen lichten Abstand (70) von 5 cm zu einem unbefahrbaren Fahrdraht (20, 26, 34, 40) eines zweiten Kettenwerks (16, 22, 30, 36) des genannten Kettenwerkspaars (14, 28) aufweist.

8. Oberleitungssystem (10) nach einem der vorhergehenden Ansprüche,
**dadurch gekennzeichnet, dass**
eine Verbindungsvorrichtung (42, 44, 46, 47) zwischen einem Fahrdraht (20, 26, 34, 40) und einem Tragseil (18, 24, 32, 38) eines ersten Kettenwerks (16, 22, 30, 36) eines Kettenwerkspaars (14, 28), welches anhand des gekrümmten Parallelfelds (48) zu einer durchgehend befahrbaren Oberleitung (12a, 12b) angeordnet ist, einen gekrümmten Abschnitt aufweist, welcher derart angeordnet ist, dass der gekrümmte Abschnitt in jedem seiner Punkte mindestens einen lichten Abstand (70) von 5 cm zu einem Tragseil (18, 24, 32, 38) eines zweiten Kettenwerks (16, 22, 30, 36) des genannten Kettenwerkspaars (14, 28) aufweist.

9. Oberleitungssystem (10) nach einem der vorhergehenden Ansprüche,
**dadurch gekennzeichnet, dass**
eine Verbindungsvorrichtung (47) der mehreren Verbindungsvorrichtungen (42, 44, 46) einen Fahrdraht (20, 26, 34, 40) und ein Tragseil (18, 24, 32, 38) eines Kettenwerks der mehreren Kettenwerke (16, 22, 30, 36) derart miteinander verbindet, dass der Verlauf der Verbindungsvorrichtung (47) ausgehend von dem Fahrdraht (20, 26, 34, 40) hin zu dem Tragseil (18, 24, 32, 38) einer geraden Verbindungslinie (54) zwischen dem Fahrdraht (20, 26, 34, 40) und dem Tragseil (18, 24, 32, 38) folgt.

10. Oberleitungssystem (10) nach einem der vorherigen Ansprüche,
**dadurch gekennzeichnet, dass**
- ein Mastsystem (72) mit mehreren Haltevorrichtungen (74) vorgesehen ist und die Fahrdrähte (20, 26, 34, 40) sowie die Tragseile (18, 24, 32, 38) der mehreren Kettenwerke (16, 22, 30, 36) mit wenigstens einer der mehreren Haltevorrichtungen (74) unmittelbar verbunden sind;
- ein Fahrdraht (20, 26, 34, 40) und ein Tragseil (18, 24, 32, 38) eines der mehreren Kettenwerke (16, 22, 30, 36) in dem Krümmungsabschnitt derart mit einer der mehreren Haltevorrichtungen (74) und einem Mast (76a, 76b) des Mastsystems (72) verbunden sind, dass ein vertikaler Stützpunktabstand (78) zwischen diesem Fahrdraht (20, 26, 34, 40) und diesem Tragseil (18, 24, 32, 38) an diesem Mast (76a, 76b) in Abhängigkeit einer Krümmung des Krümmungsabschnitts umso kleiner ist, je größer die Krümmung des Krümmungsabschnitts ist.

11. Oberleitungssystem (10) nach Anspruch 10,
**dadurch gekennzeichnet, dass**
- Kettenwerke (16, 22, 30, 36) eines Kettenwerkspaars (14, 28), welches anhand des gekrümmten Parallelfelds (48) zu einer durchgehend befahrbaren Oberleitung (12a, 12b) angeordnet ist, mittels unterschiedlicher Haltevorrichtungen der mehreren Haltevorrichtungen (74) mit einem Halterabstand (92) voneinander beabstandet mit dem Mastsystem (72) verbunden sind; und
- eine Verbindungsvorrichtung (42, 44, 46, 47) eines Kettenwerks (16, 22, 30, 36) des Kettenwerkspaars (14, 28), welche entlang eines Verlaufs des Fahrdrahts (20, 26, 34, 40) des Kettenwerks (16, 22, 30, 36) in dem Krümmungsabschnitt unmittelbar auf die mit dem Fahrdraht (20, 26, 34, 40) verbundene Haltevorrichtung (74) des Mastsystems (72) folgend angeordnet ist, entlang des Verlaufs des Fahrdrahts (20, 26, 34, 40) einen Abstand (68) zu dieser Haltevorrichtung (74) aus einem Wertebereich aufweist, welcher ein Maß des Halterabstands (92) zuzüglich 70 cm nicht unterschreitet und ein Maß des Halterabstands (92) zuzüglich 220 cm nicht überschreitet.

12. Oberleitungssystem (10) nach Anspruch 10 oder 11,
**dadurch gekennzeichnet, dass**
Masten (76a, 76b) in dem Krümmungsabschnitt derart angeordnet sind, dass diejenigen Masten (76a, 76b), mit denen eines der Kettenwerke der mehreren Kettenwerke (16, 22, 30, 36) verbunden ist, einen Mastabstand (90a, 90b) von einschließlich 30 m bis einschließlich 50 m, vorzugsweise von einschließlich 35 m bis einschließlich 40 m, zueinander aufweisen.

13. Oberleitungssystem (10) nach einem der vorherigen Ansprüche,
**dadurch gekennzeichnet, dass**
zum Zwecke einer durchgehend elektrifizierten Oberleitung (12a, 12b) zwischen zwei Kettenwerken (16, 22, 30, 36) eines Kettenwerkspaars (14, 28), welches anhand des gekrümmten Parallelfelds (48) zu einer durchgehend befahrbaren Oberleitung (12a, 12b) angeordnet ist, eine Stromverbindungsvorrichtung (80) vorgesehen ist, welche einen befahrbaren Abschnitt eines Fahrdrahts (20, 26, 34, 40) eines ersten Kettenwerks (16, 22, 30, 36) des Kettenwerkspaars (14, 28) mit einem unbefahrbaren Abschnitt eines Fahrdrahts (20, 26, 34, 40) eines zweiten Kettenwerks (16, 22, 30, 36) des Kettenwerkspaars (14, 28) verbindet, indem diese Stromverbindungsvorrichtung (80)
- derart entlang eines Abschnitts des Tragseils (18, 24, 32, 38) des ersten Kettenwerks (16, 22, 30, 36) sowie derart entlang eines Abschnitts des Tragseils (18, 24, 32, 38) des zweiten Kettenwerks (16, 22, 30, 36) angeordnet ist, dass die Stromverbindungsvorrichtung (80) entlang dieses jeweiligen Abschnitts eine Länge aufweist, welche einer maximalen temperaturbedingten Längenänderung eines Fahrdrahts (20, 26, 34, 40) des ersten oder des zweiten Kettenwerks (16, 22, 30, 36) entspricht;
- zwischen den Tragseilen (18, 24, 32, 38) des ersten und des zweiten Kettenwerks (16, 22, 30, 36) eine Schlaufe (82) mit einer Abschnittslänge von zumindest 130 cm, bevorzugt von zumindest 175 cm, aufweist.

14. Verfahren zur Erstellung eines Oberleitungssystems (10) zur Bereitstellung einer elektrischen Energie für ein elektrisch angetriebenes Fahrzeug nach einem der vorhergehenden Ansprüche, bei welchem
- mehrere Kettenwerke (16, 22, 30, 36), welche jeweils einen mittels mehreren Verbindungsvorrichtungen (42, 44, 46, 47) mit einem Tragseil (18, 24, 32, 38) verbundenen Fahrdraht (20, 26, 34, 40) aufweisen, anhand von Parallelfeldern (48, 50) zu einer durchgehend befahrbaren Oberleitung (12a, 12b) angeordnet werden; und
- wenigstens eine Oberleitung (12a, 12b) in einem Krümmungsabschnitt derart angeordnet wird, dass deren vertikale Projektion in eine horizontale Ebene einen gekrümmten Verlauf aufweist;
- in dem Krümmungsabschnitt wenigstens ein gekrümmtes Parallelfeld (48) derart angeordnet wird, dass dessen vertikale Projektion in die horizontale Ebene in dem Krümmungsabschnitt dem genannten gekrümmten Verlauf der Projektion der wenigstens einen Oberleitung (12a, 12b) folgt.

15. Verfahren nach Anspruch 14, bei welchem
- die wenigstens eine Oberleitung (12a, 12b) derart über einer Fahrbahn positioniert wird, dass die Fahrdrähte (20, 26, 34, 40) der mehreren Kettenwerke (16, 22, 30, 36) im Wesentlichen parallel zu einer Fahrspurmitte (84) verlaufen;
- wenigstens ein gerades Parallelfeld (50) vorgesehen wird, dessen vertikale Projektion in die horizontale Ebene einen im Wesentlichen geraden Verlauf einer Projektion der wenigstens einen Oberleitung (12a, 12b) in die horizontale Ebene folgt;
- eine Position von Fahrdrähten (20, 26, 34, 40) entlang des gekrümmten Parallelfelds (48) in Abhängigkeit einer Krümmung des Krümmungsabschnitts relativ zu einer Position von Fahrdrähten (20, 26, 34, 40) entlang des geraden Parallelfelds (50) transversal in horizontaler Richtung (86) versetzt angeordnet wird.

## Claims

1. Overhead line system (10) for the provision of electrical energy for an electrically driven vehicle by means of an overhead line (12a, 12b), having
- multiple catenary systems (16, 22, 30, 36), each of which has a contact wire (20, 26, 34, 40) connected to a carrying cable (18, 24, 32, 38) by means of multiple connection devices (42, 44, 46, 47) and which are arranged on the basis of parallel zones (48, 50) to form a continuously accessible overhead line (12a, 12b);
- at least one overhead line (12a, 12b), which is arranged in a curvature section such that the vertical projection thereof in a horizontal plane has a curved profile;
**characterised in that**
the overhead line system (10) has at least one curved parallel zone (48), which is arranged in the curvature section such that the vertical projection thereof in the horizontal plane in the curvature section follows the said curved profile of the projection of the at least one overhead line (12a, 12b).

2. Overhead line system (10) according to one of the preceding claims,
**characterised in that**
catenary systems (16, 22, 30, 36) of the multiple catenary systems (16, 22, 30, 36) arranged in the curvature section are designed such that a vertical axis (52) running in a plane and a straight connecting line (54) running in the same plane between the contact wire (20, 26, 34, 40) and the carrying cable (18, 24, 32, 38) of a respective catenary system (16, 22, 30, 36) confine an angle (56) which is ≥ 9° and ≤ 70°, wherein this plane substantially extends perpendicular to a direction of longitudinal extension of the at least one overhead line (12a, 12b).

3. Overhead line system (10) according to one of the preceding claims,
**characterised in that**
- the contact wires (20, 26, 34, 40) and carrying cables (18, 24, 32, 38) of a first and of a second catenary system of the multiple catenary systems (16, 22, 30, 36) are arranged in an intersection area (58) such that projections of the contact wire (20, 26, 34, 40) and of the carrying cable (18, 24, 32, 38) of the first catenary system (16, 22, 30, 36) in a horizontal plane intersect projections of the contact wire (20, 26, 34, 40) and of the carrying cable (18, 24, 32, 38) in the horizontal plane; and
- the contact wire (20, 26, 34, 40) and the carrying cable (18, 24, 32, 38) of the first catenary system (16, 22, 30, 36) are arranged in the intersection area (58) in each case above the contact wire (20, 26, 34, 40) and the carrying cable (18, 24, 32, 38) of the second catenary system (16, 22, 30, 36).

4. Overhead line system (10) according to one of the preceding claims,
**characterised in that**
- each catenary system of the multiple catenary systems (16, 22, 30, 36) has a section, along which multiple directly adjacent connection devices (42, 44, 46, 47) of the respective catenary system (16, 22, 30, 36) are spaced apart from one another, such that the connection points (66) thereof to the contact wire (20, 26, 34, 40) along the profile of the contact wire (20, 26, 34, 40) have the same standard spacing (64) from one another;
- the said sections of the catenary system (16, 22, 30, 36) are arranged in the curvature section such that connection devices (42, 44, 46, 47) of different catenary systems (16, 22, 30, 36) of a catenary system pair (14, 28), which is arranged on the basis of the curved parallel zone (48) to form a continuously accessible overhead line (12a, 12b), have a minimum spacing (60) from one another taken from a value range of between half the value of the standard spacing (64) less 100 cm and half the value of the standard spacing (64) plus 100 cm.

5. Overhead line system (10) according to claim 4,
**characterised in that**
the standard spacing (64) has a value taken from a value range of between 270 cm and 420 cm, preferably from a value range of between 270 cm and 330 cm.

6. Overhead line system (10) according to one of the preceding claims,
**characterised in that**
connection devices (42, 44, 46, 47) of the catenary system (16, 22, 30, 36) of different catenary system pairs (14, 28), which in each case are arranged on the basis of the curved parallel zone (48) to form a continuously accessible overhead line (12a, 12b), have a minimum spacing (62) from one another of 20 cm, preferably of 30 cm.

7. Overhead line system (10) according to one of the preceding claims,
**characterised in that**
a connection device (42, 44, 46, 47) between an accessible contact wire (20, 26, 34, 40) and a carrying cable (18, 24, 32, 38) of a first catenary system (16, 22, 30, 36) of a catenary system pair (14, 28), which on the basis of the curved parallel zone (48) is arranged to form a continuously accessible overhead line (12a, 12b), has a cranked section which is arranged such that the cranked section in each of its points has a clear spacing (70) of at least 5 cm from an inaccessible contact wire (20, 26, 34, 40) of a second catenary system (16, 22, 30, 36) of the said catenary system pair (14, 28).

8. The overhead line system (10) according to one of the preceding claims,
**characterised in that**
a connection device (42, 44, 46, 47) between a contact wire (20, 26, 34, 40) and a carrying cable (18, 24, 32, 38) of a first catenary system (16, 22, 30, 36) of a catenary system pair (14, 28), which on the basis of the curved parallel zone (48) is arranged to form a continuously accessible overhead line (12a, 12b), has a curved section which is arranged such that the curved section in each of its points has a clear spacing (70) of at least 5 cm from a carrying cable (18, 24, 32, 38) of a second catenary system (16, 22, 30, 36) of the said catenary system pair (14, 28).

9. Overhead line system (10) according to one of the preceding claims,
**characterised in that**
a connection device (47) of the multiple connection devices (42, 44, 46) connects a contact wire (20, 26, 34, 40) and a carrying cable (18, 24, 32, 38) of a catenary system of the multiple catenary systems (16, 22, 30, 36) to one another such that the profile of the connection device (47), starting from the contact wire (20, 26, 34, 40) through to the carrying cable (18, 24, 32, 38), follows a straight connecting line (54) between the contact wire (20, 26, 34, 40) and the carrying cable (18, 24, 32, 38).

10. Overhead line system (10) according to one of the preceding claims,
**characterised in that**
- a mast system (72) with multiple retaining devices (74) is provided and the contact wires (20, 26, 34, 40) as well as the carrying cables (18, 24, 32, 38) of the multiple catenary systems (16, 22, 30, 36) are directly connected to at least one of the multiple retaining devices (74);
- a contact wire (20, 26, 34, 40) and a carrying cable (18, 24, 32, 38) of one of the multiple catenary systems (16, 22, 30, 36) in the curvature section are connected to one of the multiple retaining devices (74) and a mast (76a, 76b) of the mast system (72) such that a vertical support point spacing (78) between said contact wire (20, 26, 34, 40) and said carrying cable (18, 24, 32, 38) at this mast (76a, 76b) is, as a function of a curvature of the curvature section, smaller the greater the curvature of the curvature section.

11. Overhead line system (10) according to claim 10, **characterised in that**
- catenary systems (16, 22, 30, 36) of a catenary system pair (14, 28), which on the basis of the curved parallel zone (48) is arranged to form a continuously accessible overhead line (12a, 12b), are connected, by means of different retaining devices of the multiple retaining devices (74), to the mast system (72), spaced apart from one another by a retaining spacing (92); and
- a connection device (42, 44, 46, 47) of a catenary system (16, 22, 30, 36) of the catenary system pair (14, 28), which is arranged directly following the retaining device (74) of the mast system (72) connected to the contact wire (20, 26, 34, 40) along a profile of the contact wire (20, 26, 34, 40) of the catenary system (16, 22, 30, 36) in the curvature section, has, along the profile of the contact wire (20, 26, 34, 40), a spacing (68) from said retaining device (74) taken from a value range that is not less than the size of the retaining spacing (92) plus 70 cm and is not greater than the size of the retaining spacing (92) plus 220 cm.

12. Overhead line system (10) according to claim 10 or 11, **characterised in that**
masts (76a, 76b) in the curvature section are arranged such that those masts (76a, 76b) to which one of the catenary systems of the multiple catenary systems (16, 22, 30, 36) is connected have a mast spacing (90a, 90b) from one another of between 30 m and 50 m, preferably of between 35 m and 40 m.

13. Overhead line system (10) according to one of the preceding claims,
**characterized in that**
for the purpose of a continuously electrified overhead line (12a, 12b) between two catenary systems (16, 22, 30, 36) of a catenary system pair (14, 28), which on the basis of the curved parallel zone (48) is arranged to form a continuously accessible overhead line (12a, 12b), a power connection device (80) is provided, which connects an accessible section of a contact wire (20, 26, 34, 40) of a first catenary system (16, 22, 30, 36) of the catenary system pair (14, 28) to an inaccessible section of a contact wire (20, 26, 34, 40) of a second catenary system (16, 22, 30, 36) of the catenary system pair (14, 28), **in that** said power connection device (80)
- is arranged along a section of the carrying cable (18, 24, 32, 38) of the first catenary system (16, 22, 30, 36) and along a section of the carrying cable (18, 24, 32, 38) of the second catenary system (16, 22, 30, 36) such that the power connection device (80) along said respective section has a length that corresponds to a maximum temperature-related change in length of a contact wire (20, 26, 34, 40) of the first or of the second catenary system (16, 22, 30, 36);
- between the carrying cables (18, 24, 32, 38) of the first and of the second catenary system (16, 22, 30, 36) has a loop (82) with a section length of at least 130 cm, preferably of at least 175 cm.

14. Method for the creation of an overhead line system (10) for the provision of electrical energy for an electrically driven vehicle according to one of the preceding claims, in which
- multiple catenary systems (16, 22, 30, 36), each of which has a contact wire (20, 26, 34, 40) connected to a carrying cable (18, 24, 32, 38) by means of multiple connection devices (42, 44, 46, 47), are arranged on the basis of parallel zones (48, 50) to form a continuously accessible overhead line (12a, 12b); and
- at least one overhead line (12a, 12b) in a curvature section is arranged such that the vertical projection thereof in a horizontal plane has a curved profile;
- in the curvature section at least one curved parallel zone (48) is arranged such that the vertical projection thereof in the horizontal plane in the curvature section follows the said curved profile of the projection of the at least one overhead line (12a, 12b).

15. Method according to claim 14, in which
- the at least one overhead line (12a, 12b) is positioned above a carriageway such that the contact wires (20, 26, 34, 40) of the multiple catenary systems (16, 22, 30, 36) run substantially in parallel to the centre of a traffic lane (84) ;
- at least one straight parallel zone (50) is provided, the vertical projection of which in the horizontal plane follows a substantially straight profile of the projection of the at least one overhead line (12a, 12b) in the horizontal plane;
- a position of contact wires (20, 26, 34, 40) along the curved parallel zone (48) is arranged offset as a function of a curvature of the curvature section relative to a position of contact wires (20, 26, 34, 40) along the straight parallel zone (50) in the transverse horizontal direction (86).

## Revendications

1. Système (10) à caténaire pour disposer d'une énergie électrique pour un véhicule entraîné électrique au moyen d'une caténaire (12a, 12b), comportant
- plusieurs suspensions (16, 22, 30, 36) de caténaire, qui ont chacune un fil (20, 26, 34, 40) de contact relié à un câble (18, 24, 32, 38) porteur au moyen de plusieurs dispositifs (42, 44, 46, 47) de liaison et qui sont montés, à l'aide de ressorts (48, 50) parallèles à une caténaire (12a, 12b) itinérante sans interruption, et
- au moins une caténaire (12a, 12b), qui est disposée dans une partie de courbure, de manière à que sa projection verticale sur un plan horizontal ait un tracé incurvé,
**caractérisé en ce que**
le système (10) à caténaire a au moins un champ (48) parallèle incurvé, qui est disposé dans la partie de courbure, de manière à que sa projection verticale sur le plan horizontal dans la partie de courbure suive ledit tracé incurvé de la projection du au moins une caténaire (12a, 12b).

2. Système (10) à caténaire suivant l'une des revendications précédentes,
**caractérisé en ce que**
les suspensions (16, 22, 30, 36) de caténaire, disposées dans la partie de courbure, des plusieurs suspensions (16, 22, 30, 36) de caténaire sont constituées de manière à ce qu'un axe (52) vertical s'étendant dans un plan et une ligne (54) droite de liaison s'étendant dans le même plan entre le fil (20, 26, 34, 40) de contact et le câble (18, 24, 32, 38) porteur d'une suspension (16, 22, 30, 36) respective de caténaire fasse un angle (56), qui est ≥ à 9° ou ≤ à 70°, dans lequel ce plan s'étend sensiblement perpendiculairement à une direction d'étendue longitudinal de la moins une caténaire (12a, 12b).

3. Système (10) à caténaire suivant l'une des revendications précédentes, **caractérisé en ce que**
- les fils (20, 26, 34, 40) de contact et les câbles (18, 24, 32, 38) porteurs d'une première et d'une deuxième suspensions de caténaire de la pluralité de suspensions (16, 22, 30, 36) de caténaire sont disposés dans une partie (58) de croisement, de manière à ce que des projections du fil (20, 26, 34, 40) de contact et du câble (18, 24, 32, 38) porteur de la première suspension (16, 22, 30, 36) de caténaire croisent dans un plan horizontal des projections du fil (20, 26, 34, 40) de contact et du câble (18, 24, 32, 38) porteur dans le plan horizontal ; et
- le fil (20, 26, 34, 40) de contact et le câble (18, 24, 32, 38) porteur de la première suspension (16, 22, 30, 36) de caténaire dans la partie (58) de croisement sont disposés respectivement au-dessus du fil (20, 26, 34, 40) de contact et du câble (18, 24, 32, 38) porteur de la deuxième suspension (16, 22, 30, 36) de caténaire.

4. Système (10) à caténaire suivant l'une des revendications précédentes,
**caractérisé en ce que**
- chaque suspension de caténaire de la pluralité de suspensions (16, 22, 30, 36) de caténaire a une partie le long de laquelle plusieurs dispositifs (42, 44, 46, 47) de liaison directement voisins les uns des autres de la suspension (16, 22, 30, 36) de caténaire respective sont à distance les uns des autres, de manière à ce que leurs points (66) de liaison avec le fil (20, 26, 34, 40) de contact aient, le long du tracé du fil (20, 26, 34, 40) de contact, la même distance (64) de réglage entre eux ;
- lesdites parties des suspensions (16, 22, 30, 36) de caténaire sont disposées dans la partie de courbure, de manière à ce que des dispositifs (42, 44, 46, 47) de liaison de suspensions (16, 22, 30, 36) de caténaire différentes d'une paire (14, 28) de suspensions de caténaire, qui est disposée à l'aide du champ (48) incurvé parallèle par rapport à une caténaire (12a, 12b) itinérante sans interruption, aient entre eux une distance (60) minimum dans une plage de valeur d'une demi-valeur de la distance (64) de réglage avec déduction de 100 cm à la demi-valeur de la distance (64) de réglage avec addition de 100 cm.

5. Système (10) à caténaire suivant la revendication 4, **caractérisé en ce que**
la distance (64) de réglage a une valeur dans une plage de valeur de 270 cm et 420 cm, de préférence dans une plage de valeur de 270 cm à 330 cm.

6. Système (10) à caténaire suivant l'une des revendications précédentes,
**caractérisé en ce que**
des dispositifs (42, 44, 46, 47) de liaison des suspensions (16, 22, 30, 36) de caténaire de paires (14, 28) de suspensions de caténaire différentes, qui sont disposées respectivement à l'aide du champ (48) parallèle incurvé par rapport à une caténaire (12a, 12b) itinérante sans interruption, ont une distance (62) minimum de 20 cm, de préférence de 30 cm entre elles.

7. Système (10) à caténaire suivant l'une des revendications précédentes,
**caractérisé en ce qu'**
un dispositif (42, 44, 46, 47) de liaison a, entre un fil (20, 26, 34, 40) de contact itinérant et un câble (18, 24, 32, 38) porteur d'une première suspension (16, 22, 30, 36) de caténaire d'une paire (14, 28) de suspension de caténaire, qui est disposée à l'aide du champ (48) parallèle incurvé par rapport à une caténaire (12a, 12b) itinérante sans interruption, une partie coudée, qui est disposée de manière à ce que la partie coudée ait, dans chacun de ses points, au moins une distance (70) de dégagement de 5 cm à un fil (20, 26, 34, 40) de contact non itinérant d'une deuxième suspension (16, 22, 30, 36) de caténaire de ladite paire (14, 28) de suspensions de caténaire.

8. Système (10) à caténaire suivant l'une des revendications précédentes,
**caractérisé en ce qu'**
un dispositif (42, 44, 46, 47) de liaison a, entre un fil (20, 26, 34, 40) de contact et un câble (18, 24, 32, 38) porteur d'une première suspension (16, 22, 30, 36) de caténaire d'une paire (14 28) de suspensions de caténaire, qui est disposée à l'aide du champ (48) parallèle incurvé par rapport à une caténaire (12a, 12b) itinérante sans interruption, une partie incurvée, qui est disposée de manière à ce que la partie incurvée ait, dans chacun de ses points, au moins une distance (70) de dégagement de 5 cm à un câble (18, 24, 32, 38) porteur d'une deuxième suspension (16, 22, 30, 36) de caténaire de ladite paire (14, 28) de suspensions de caténaire.

9. Système (10) à caténaire suivant l'une des revendications précédentes,
**caractérisé en ce qu'**
un dispositif (47) de liaison des plusieurs dispositifs (42, 44, 46) de liaison relie à un fil (20, 26, 34, 40) de contact et un câble (18, 24, 32, 38) porteur d'une suspension de caténaire des plusieurs suspensions (16, 22, 30, 36) de caténaire entre eux, de manière à ce que le tracé du dispositif (47) de liaison, en partant du fil (20, 26, 34, 40) de contact jusqu'au câble (18, 24, 32, 38) porteur, suive une ligne (54) de liaison droite entre le fil (20, 26, 34, 40) de contact et le câble (18, 24, 32, 38) porteur.

10. Système (10) à caténaire suivant l'une des revendications précédentes,
**caractérisé en ce qu'**
- il est prévu un système (72) de poteau ayant plusieurs dispositifs (74) de maintien et les fils (20, 26, 34, 40) ainsi que les câbles (18, 24, 32, 38) porteurs des plusieurs suspensions (16, 22, 30, 36) de caténaire sont reliés directement a au moins l'un des plusieurs dispositifs (74) de maintien ;
- un fil (20, 26, 34, 40) de contact et un câble (18, 24, 32 38) porteur de l'une des plusieurs suspensions (16, 22, 30, 36) de caténaire dans la partie de courbure sont reliés à l'un des plusieurs dispositifs (74) de maintien et à un poteau (76a, 76b) du système (72) de poteau, de manière à ce qu'une distance (78) verticale de point d'appui, entre ce fil (20, 26, 34, 40) de contact et ce câble (18, 24, 32, 38) porteur sur ce poteau (76a, 76b), soit en fonction d'une courbure de la partie de courbure d'autant plus petite que la courbure de la partie de courbure est plus grande.

11. Système (10) à caténaire suivant la revendication 10, **caractérisé en ce que**
- des suspensions (16, 22, 30, 36) de caténaire d'une paire (14, 28) de suspensions de caténaire qui est, à l'aide du champ (48) parallèle incurvé, disposée par rapport à une caténaire (12a, 12b) itinérante sans interruption, sont, au moyen de dispositifs de maintien différents des plusieurs dispositifs (74) de maintien, reliés en étant à distance l'une de l'autre d'une distance (92) de maintien au système (72) de poteau ; et
- un dispositif (42, 44, 46, 47) de liaison d'une suspension (16, 22, 30, 36) de caténaire de la paire (14, 28) de suspensions de caténaire, qui est disposé le long d'un tracé du fil (20, 26, 34, 40) de contact de la suspension (16, 22, 30, 36) de caténaire dans la partie de courbure en suivant directement le dispositif (74) de maintien, relié au fil (20, 26, 34, 40) de contact, du système (72) de poteau a, le long du tracé du fil (20, 26, 34, 40) de contact, une distance (68) à ce dispositif (74) de maintien dans une plage de valeurs, qui n'est pas inférieure à une valeur de la distance (92) de maintien additionnée de 70 cm et qui ne dépasse pas une valeur de la distance (92) de maintien additionnée de 220 cm.

12. Système (10) à caténaire suivant la revendication 10 ou 11, **caractérisé en ce que**
des poteaux (76a, 76b) sont disposés dans la partie de courbure, de manière à ce que les poteaux (76a, 76b), auxquels l'une des suspension de caténaire des plusieurs suspensions (16, 22, 30, 36) de caténaire est reliée, ont entre eux une distance (90a, 90b) entre poteaux de y compris 30 m jusqu'à y compris 50 m, de préférence y compris 35 m jusqu'à y compris 40 m.

13. Système (10) à caténaire suivant l'une des revendications précédentes,
**caractérisé en ce qu'**
il est prévu, aux fins d'une caténaire (12a, 12b) électrifiée sans interruption entre deux suspensions (16, 22, 30, 36) de caténaire d'une paire (14, 28) de suspensions de caténaire, qui est disposé à l'aide du champ (48) parallèle incurvé par rapport à une caténaire (12a, 12b) itinérante sans interruption, un dispositif (80) de connexion de courant, qui relie un tronçon itinérant d'un fil (20, 26, 34, 40) de contact d'une première suspension (16, 22, 30, 36) de caténaire de la paire (14, 28) de suspensions de caténaire, à un tronçon non itinérant d'un fil (20, 26, 34, 40) de contact d'une deuxième suspension (16, 22, 30, 36) de caténaire de la paire (14, 28) de suspensions de caténaire, par le fait que ce dispositif (80) de connexion de courant
- est disposé le long d'un tronçon du câble (18, 24, 32, 38) porteur de la première suspension (16, 22, 30, 36) de caténaire, ainsi que le long d'un tronçon du câble (18, 24, 32, 38) porteur de la deuxième suspension (16, 22, 30, 36) de caténaire, de manière à ce que le dispositif (80) de connexion de courant ait, le long de ce tronçon respectif, une longueur qui corresponde à une variation de longueur maximale due à la température d'un fil (20, 26, 34, 40) de contact de la première ou de la deuxième suspension (16, 22, 30, 36) de caténaire ;
- a, entre les câbles (18, 24, 32, 38) porteurs de la première et de la deuxième suspensions (16, 22, 30, 36) de caténaire, une boucle (82) ayant une longueur de tronçon d'au moins 130 cm, de préférence d'au moins 175 cm.

14. Procédé d'établissement d'un système (10) à caténaire pour disposer d'une énergie électrique pour un véhicule entraîné électriquement suivant l'une des revendications précédentes, dans lequel
- on dispose, à l'aide de champs (48, 50) parallèles par rapport à une caténaire (12a, 12b) itinérante sans interruption, plusieurs suspensions (16, 22, 30, 36) de caténaire, qui ont chacune un fil (20, 26, 34, 40) de contact relié à un câble (18, 24, 32, 38) porteur au moyen de plusieurs dispositifs (42, 44, 46, 47) de liaison ; et
- on monte au moins une caténaire (12a, 12b) dans un tronçon de courbure, de manière à ce que sa projection verticale sur un plan horizontal ait un tracé incurvé ;
- on monte, dans le tronçon de courbure, au moins un champ (48) parallèle incurvé, de manière à ce que sa projection verticale sur le plan horizontal suive, dans le tronçon de courbure, ladite courbe incurvée de la projection du au moins une caténaire (12a, 12b).

15. Procédé suivant la revendication 14, dans lequel
- on positionne la au moins une caténaire (12a, 12b) sur une voie de circulation, de manière à ce que les fils (20, 26, 34, 40) de contact des plusieurs suspensions (16, 22, 30, 36) de caténaire s'étendent sensiblement parallèlement à un milieu (84) de voie de circulation ;
- on prévoit au moins un champ (50) parallèle rectiligne dont la projection verticale sur le plan horizontal suit une courbe sensiblement droite d'une projection de la au moins une caténaire (12a, 12b) sur le plan horizontal ;
- on dispose, de manière décalée dans la direction (86) horizontale transversalement par rapport à une position de fils (20, 26, 34, 40) de contact le long du champ (50) parallèle rectiligne, une position de fils (20, 26, 34, 40) de contact le long du champ (48) parallèle incurvé en fonction d'une courbure du tronçon de courbure.
